# FASCICULE DE BREVET EUROPEEN

(11) **EP 2 160 303 B1**
(45) Date de publication et mention de la délivrance du brevet: **22.04.2015**
(21) Numéro de dépôt: 08805969.6
(22) Date de dépôt: 10.06.2008
(51) Int. Cl.: B60N 2/48, B64D 11/06

(54) **APPUI-TETE MULTIMODAL POUR SIEGE DE VEHICULE**
MEHRMODEN-KOPFSTÜTZE FÜR EINEN FAHRZEUGSITZ
MULTIMODAL HEADREST FOR VEHICLE SEAT

(30) Priorité: 15.06.2007 FR 0704275
(43) Date de publication de la demande: 10.03.2010
(73) Titulaire: AIRBUS OPERATIONS (S.A.S), 31060 Toulouse (FR)
(72) Inventeur: LE TEXIER, Maxime, 31400 Toulouse (FR); LEYMAT, Régis, 31000 Toulouse (FR); DUROCH, Louis, 13100 Aix en Provence (FR); CECINAS, Laurent, 17870 Breuil Magne (FR)
(74) Mandataire: Gicquel, Olivier Yves Gérard
(86) Numéro de dépôt international: PCT/FR2008/051034
(87) Numéro de publication internationale: WO 2009/004211

(56) Documents cités:
- EP-A- 1 356 987
- EP-A- 1 495 909
- EP-A- 1 580 067
- DE-A1-102005 030 313
- GB-A- 1 517 817
- US-A- 5 622 405
- US-A1- 2002 121 802
- US-B1- 6 616 235

## Description

La présente invention concerne un appui-tête pour siège de véhicule, notamment un aéronef. Plus particulièrement, l'invention concerne un appui-tête destiné à être installé sur des sièges dont les occupants doivent disposer d'un maintien de la tête tantôt avec et tantôt sans casque.

Un appui-tête pour siège de véhicule est généralement réalisé pour offrir un confort et une sécurité à un occupant du siège. Cet appui-tête, positionné dans le prolongement du dossier du siège, tel que par exemple un siège pour un pilote dans une cabine de pilotage d'un aéronef, permet un maintien de la tête du pilote et contribue à diminuer les tensions cervicales dues au port de la masse crânienne pour le pilote lorsqu'il réalise une tache de conduite ou de pilotage.

Pour assurer un meilleur confort et remplir au mieux leur fonction suivant différentes configurations d'utilisation, les appuis-tête existants sont réglables en hauteur et ou en inclinaison vers l'avant/arrière, afin de permettre un réglage de la position de l'appui-tête par rapport à la tête du pilote, pour obtenir soit un maintien occipital soit un maintien cervical.

Cependant, les réglages en hauteur et ou en inclinaison de ces appuis-tête sont le plus souvent commandés par des mécanismes séparés, ce qui nuit à leur manipulation rapide.

De plus, ces appuis-tête, lorsqu'ils doivent être utilisés tantôt dans une configuration où le pilote est non casqué tantôt dans une configuration où le pilote est casqué, tel que par exemple à bord d'un aéronef militaire, sont inadaptés à l'une ou l'autre des configurations, car il n'existe pas de réglage s'adaptant à la surépaisseur occipitale créée par le casque.

La mise en oeuvre d'un appui-tête qui permet de combiner les deux capacités de réglage dans un même mécanisme tout eh fournissant au pilote un maintien de la tête à la fois avec et sans casque est donc importante pour simplifier les réglages.

Le document US-A-5 622 405 divulgue un siège pour véhicule comportant un dossier sur lequel est monté un appui-tête. Celui-ci comporte une face avant, ainsi qu'une face arrière pourvue d'une cavité anatomique apte à recevoir la tête d'un passager du véhicule. L'appui-tête peut être déplacé entre une première position dans laquelle sa face avant est en regard de la tête du passager et une deuxième position dans laquelle sa face arrière est en regard de la tête du passager. Toutefois, cet appui-tête ne résout pas les problèmes précités des appuis-tête existants.

L'invention est relative à un siège pour véhicule selon la revendication 1. L'invention concerne également un appui-tête pour siège de véhicule, selon la revendication 7.

La description détaillée de l'invention est faite en référence aux figures qui représentent:
**Figure 1****,** une vue schématique d'un appui-tête suivant l'invention,
**Figure 2****,** une vue éclatée d'un mécanisme de réglage de l'appui-tête selon l'invention,
**Figure 3a****,** une vue de profil d'un siège, et de son occupant, comportant un appui-tête suivant l'invention illustrant deux positionnements de l'appui-tête, pour un maintien occipital et un maintien cervical pour un occupant non casqué et de petite taille,
**Figure 3b****,** une vue de profil d'un siège, et de son occupant, comportant un appui-tête suivant l'invention illustrant deux positionnements de l'appui-tête pour un maintien occipital et un maintien cervical pour un pilote casqué et de petite taille,
**Figure 4a****,** une vue de profil d'un siège, et de son occupant, comportant un appui-tête suivant l'invention illustrant deux positionnements de l'appui-tête pour un maintien occipital et un maintien cervical pour un pilote non casqué et de grande taille,
**Figure 4b****,** une vue de profil d'un siège, et de son occupant, comportant un appui-tête suivant l'invention illustrant deux positionnements de l'appui-tête pour un maintien occipital et un maintien cervical pour un pilote casqué et de grande taille,
**Figure 5a****,** une vue de profil d'un siège, et de son occupant, comportant un appui-tête suivant l'invention illustrant deux positionnements de l'appui-tête pour un maintien occipital et un maintien cervical pour un pilote non casqué et de petite taille, lorsque le dossier est incliné vers l'arrière,
**Figure 5b****,** une vue de profil d'un siège, et de son occupant, comportant un appui-tête suivant l'invention illustrant deux positionnements de l'appui-tête pour un maintien occipital et un maintien cervical pour un pilote non casqué et de grande taille, lorsque le dossier est incliné vers l'arrière.

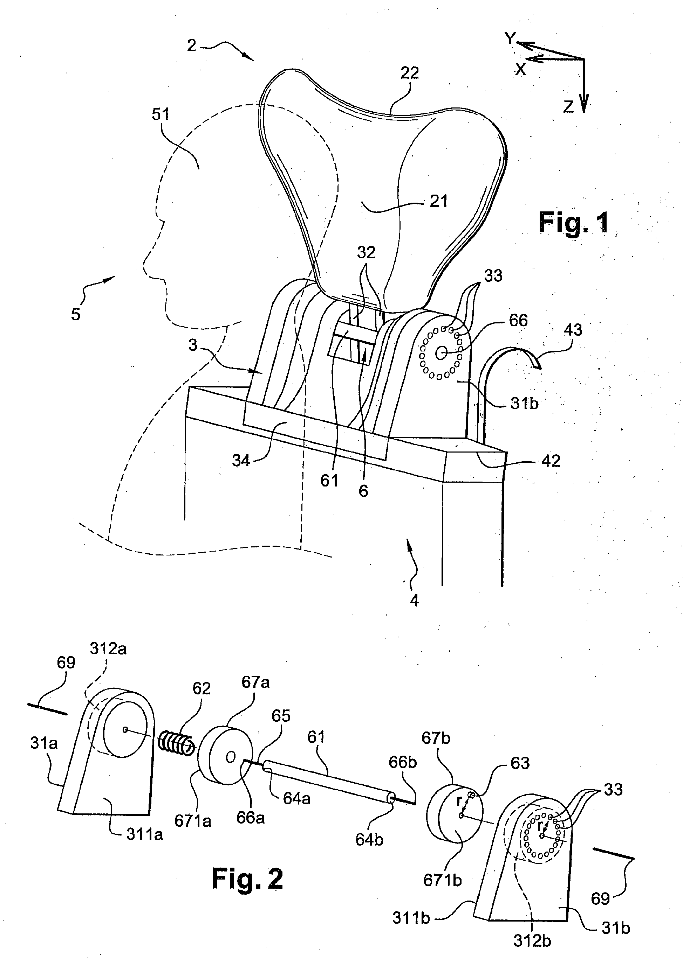

Un appui-tête 1 suivant l'invention, comme illustré sur la figure 1, est destiné à être monté sur une partie supérieure 42 d'un dossier 4 d'un siège, dans le prolongement dudit dossier, et comporte une têtière 2 apte à supporter une tête 51 d'un occupant 5 du siège.

L'exemple de réalisation, illustré sur les figures 1 à 5b, est décrit dans le cas d'un appui-tête 1 destiné à être monté sur un siège pour un pilote d'un aéronef militaire, mais l'invention est aussi applicable à tout siège dont l'occupant doit disposer d'un maintien de la tête tantôt avec et tantôt sans casque.

La têtière 2 comporte :
- une première surface d'appui 21 présentant une forme adaptée à la courbure d'un occiput de la tête 51 du pilote 5,
- une seconde surface d'appui 22 présentant une forme adaptée à la courbure d'une nuque de la tête 51 du pilote 5.

Pour permettre un réglage en fonction de la morphologie du pilote et du port ou non d'un casque 52 par le pilote 5, le positionnement de la têtière 2 par rapport à la tête 51 du pilote 5 est réalisé sensiblement suivant des axes X et Z dans le repère de l'aéronef, c'est à dire par un mouvement avant/arrière (axe X) et un mouvement haut/bas (axe vertical Z), entre au moins deux positions stables :
- une position caractéristique d'un maintien cervical,
- une position caractéristique d'un maintien occipital.

Pour effectuer le réglage en X et ou en Z, l'appui-tête 1 comporte un moyen de réglage 6 positionné entre la partie supérieure 42 du dossier 4 du siège et la têtière 2.

Le moyen de réglage 6, comme illustré sur la figure 2, comporte un premier arbre de rotation 61, creux, coulissant et tournant autour d'un second arbre de rotation 65, coaxial, ledit second arbre de rotation s'étendant suivant un axe de rotation 69, sur tout ou partie d'une largeur du dossier 4 du siège.

Le second arbre de rotation 65 est maintenu fixe au niveau des extrémités 66a, 66b, par deux plaques 31 a, 31 b, parallèles entre elles et positionnées latéralement sur une épaisseur du dossier 4 du siège, suivant l'axe X.

Le premier arbre de rotation 61, de longueur sensiblement inférieure à une longueur du second arbre de rotation 65, comporte, au niveau de chacune des extrémités 64a, 64b, une pièce tournante 67a, 67b, par exemple en forme de disque centré sur chaque extrémité 64a, 64b.

La plaque 31a, respectivement 31b, comporte une zone en creux 312a, respectivement 312b, de sorte à créer un logement pour recevoir la pièce 67a, respectivement 67b.

Des moyens de ressort 62, par exemple un ressort, positionnés autour du second arbre de rotation 65 entre une face intérieure 311a de la première plaque 31a, et une face extérieure 671a de la pièce tournante 67a, exercent une pression sur la face extérieure 671a. Lesdits moyens de ressort sont partiellement précontraints lorsque la têtière 2 est dans une position stable.

Une fois assemblé, le second arbre de rotation 65 est maintenu fixe dans des paliers au niveau des deux plaques 31a, 31b. Les pièces tournantes 67a, 67b sont solidaires du premier arbre de rotation 61, ledit premier arbre de rotation coulissant et tournant autour du second arbre de rotation 65.

La pièce tournante 67b comporte au moins un pion de verrouillage 63, situé à un rayon r de l'extrémité 64b de l'axe de rotation 69 de l'arbre de rotation 61, sur une face extérieure 671b en regard d'une face intérieure 311b de la seconde plaque 31b.

La seconde plaque 31 b comporte des évidements 33 positionnés de sorte à être situés sur un cercle, de rayon r, centré sur l'axe de rotation 69 du second arbre de rotation 65, les évidements 33 étant, par leurs dimensions, tels que le au moins un pion de verrouillage 63 s'y engage aisément et sans jeu excessif. Le au moins un pion de verrouillage 63 peut comporter par exemple une extrémité légèrement arrondie ou un chanfrein.

De préférence, la pièce tournante 67b comporte deux pions de verrouillage 63, chaque pion de verrouillage 63 coopérant avec un évidement 33, pour assurer un meilleur verrouillage de la têtière 2.

La têtière 2 est solidaire du premier arbre de rotation 61, par exemple par deux tiges 32, comme illustré sur la figure 1, sensiblement parallèles et fixées sur l'axe de rotation 61, sensiblement perpendiculaires audit axe de rotation 61, lesdites tiges présentant une surface d'appui suffisante avec l'axe de rotation 61 pour assurer une solidité suffisante sans risque de matage excessif.

Lorsque la têtière 2 est dans une position stable, les moyens de ressort 62 sont sensiblement précontraints entre la pièce 67a et la plaque 31a, la pièce 67b est en contact avec la plaque 31b au niveau de la face extérieure 671b et le au moins un pion de verrouillage 63 est positionné dans un évidement 33 de la plaque 31b, ce qui a pour effet de maintenir la têtière 2 dans une position stable. Pour modifier le positionnement de la têtière 2 d'une position stable à une autre position stable, le pilote 5 déverrouille la position stable actuelle en effectuant, du coté de la plaque 31b comportant les évidements 33, une poussée latérale de la têtière 2, de sorte à comprimer les moyens de ressort 62 et à dégager le au moins un pion de verrouillage 63 de son évidement 33. Avantageusement, la poussée est réalisée avec une seule main.

En effectuant la poussée, le premier arbre de rotation 61 et les pièces tournantes 67a, 67b subissent une translation par glissement sur le second arbre de rotation 65, et les moyens de ressort 62, qui maintenaient le au moins un pion de verrouillage 63 en position dans un des évidements 33 de la seconde plaque 31b, sont comprimés par la pièce 67a. Par cette translation qui concerne aussi la pièce 67b, le au moins un pion de verrouillage 63 est libéré de l'évidement 33 de la plaque 31b dans lequel il était engagé avant la translation. La têtière 2, solidaire du premier arbre de rotation 61, est alors libre de pivoter, la pression sur ladite têtière continuant de comprimer les moyens de ressort 62. Lorsque la têtière 2 a atteint une position désirée, la poussée latérale sur ladite têtière est relâchée. Les moyens de ressort 62 se détendent, repoussant le premier arbre de rotation 61 et les pièces tournantes 67a, 67b jusqu'à ce que la pièce 67b entre en contact avec la plaque 31b, au niveau de la surface extérieure 67b. Le au moins un pion de verrouillage 63 entre dans un des évidements 33 de la plaque 31b en regard, verrouillant automatiquement la position de la têtière 2, dont la nouvelle position devient stable.

Avantageusement, l'axe de rotation 69 du premier arbre de rotation 61 est positionné sensiblement en hauteur au niveau du creux de nuque d'un pilote de taille moyenne, et de préférence dans une partie supérieure de la nuque, c'est à dire sensiblement au dessus du creux de la nuque. Ainsi, la rotation de la têtière 2 permet une combinaison avant/arrière et haut/bas en un seul mouvement, un mouvement angulaire.

Avantageusement, les positions stables autoverrouillables permettent de prévenir le basculement de l'appui-tête 1 vers l'avant, par exemple lorsqu'un autre membre d'équipage prend appui sur la têtière 2.

Lorsque la têtière 2 est dans une position sensiblement haute, la tête 51 d'un pilote 5 est maintenue au niveau de l'occiput par la première surface 21 de la têtière 2, la tête du pilote étant casquée ou non.

Lorsque la têtière 2 est dans une position basse vers l'avant, la tête 51 du pilote 5 est maintenue au niveau de sa nuque par la seconde surface 22 de la têtière 2. Ainsi, ladite têtière peut se placer en position basse pour venir soulager partiellement la tête 51 de la masse supportée, même lorsque le pilote 5 est casqué, le casque 52 ne recouvrant pas la nuque.

Avantageusement, les évidements 33 réalisés sur la plaque 31 b déterminent un ensemble de position angulaire de la têtière 2 qui permettent à ladite têtière de s'adapter facilement à la morphologie du pilote 5 ainsi qu'au port ou non du casque 52 par ledit pilote, et donc à la surépaisseur occipitale créée par ledit casque, pendant les tâches de pilotage. Ainsi, l'appui-tête 1 est adaptable à de nombreuses tailles de pilotes, en particulier pour des pilotes ayant des tailles comprises entre 1570mm et 1905mm et suivant les normes MIL-HDBK-759C, généralement reprises par d'autres normes utilisées pour la conception de poste de pilotage.

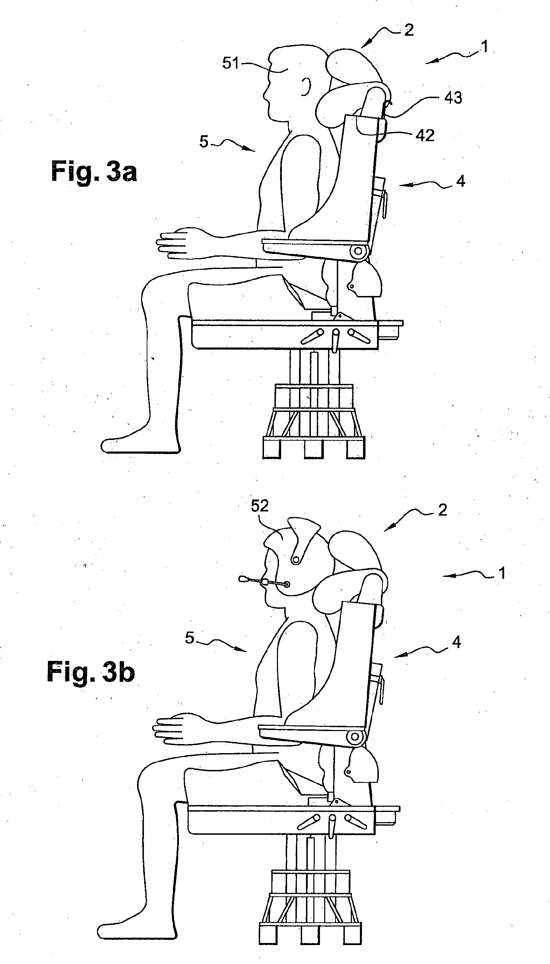

La position de la têtière 2 pour le maintien occipital et le maintien cervical est différente pour un pilote de grande taille et pour un pilote de petite taille ou de taille moyenne, comme illustré sur les figures 3a à 4b. De plus, la position de la têtière 2 pour le maintien occipital est différente suivant que le pilote est casqué ou non.

La figure 3a illustre le maintien occipital et le maintien cervical pour un pilote de petite taille et non casqué tandis que la figure 3b illustre les deux mêmes maintiens pour un pilote de petite taille casqué.

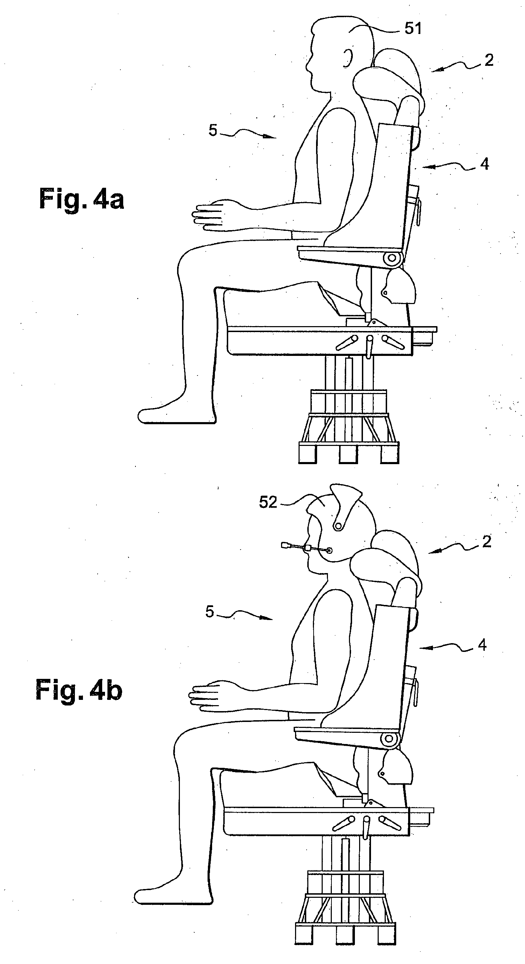

La figure 4a illustre le maintien occipital et le maintien cervical pour un pilote de grande taille et non casqué tandis que la figure 4b illustre les deux mêmes maintiens pour un pilote de grande taille casqué.

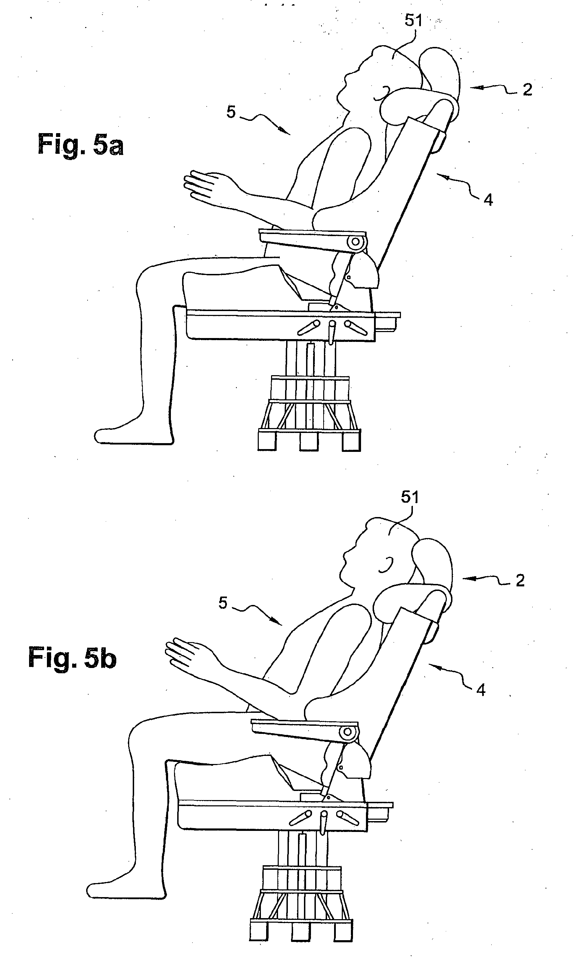

Avantageusement, lorsque le siège est en position inclinée vers l'arrière, la têtière 2 est aussi positionnable pour assurer le maintien occipital ou le maintien cervical nécessaire pour assurer un meilleur confort au pilote et plus particulièrement lorsque ledit pilote est dans une position de repos, et ceci quelque soit la morphologie du pilote, comme illustré sur les figures 5a,5b.

Avantageusement, afin de faciliter l'accès aux commandes d'un panneau plafond, la têtière 2 comporte de plus une position stable, en position haute et sensiblement vers l'arrière, dans laquelle le pilote 5 casqué ou non ne se trouve pas gêné par un contact avec la têtière 2.

En outre, la têtière 2, lorsqu'elle se trouve dans la position haute vers l'arrière, permet de limiter le déplacement de la tête 51 du pilote 5 vers l'arrière quand ladite tête est soumise à des accélérations ou vibrations qui peuvent être importantes, réduisant notablement, de ce fait, le risque de blessures ou de troubles musculo-squelettiques au niveau du rachis cervical.

Afin d'améliorer l'accessibilité et la visibilité au panneau plafond, la têtière 2 présente une largeur inférieure à la largeur du dossier du siège.

De préférence, les plaques 31 a, 31 b sont espacées d'une distance inférieure à la largeur du dossier du siège afin de permettre la fixation d'un moyen de suspension 43, tel que par exemple un crochet, sur une des extrémités de la partie supérieure 42 du dossier 4 du siège pour y fixer le casque lorsque ledit casque n'est pas utilisé par le pilote, maintenant ledit casque rapidement accessible depuis le siège.

Afin de protéger la tête 51 du pilote 5 du moyen de réglage 6, une armature 3, prenant appui sur les deux plaques 31a; 31b, recouvre le moyen de réglage 6 et présente une forme adaptée à la forme de la têtière pour ne gêner les mouvements de la têtière 2 lorsque celle-ci effectue sa rotation. Ladite armature présente des extensions 34 pour permettre sa fixation sur la partie supérieure 42 du dossier 4 du siège.

Ainsi, l'appui-tête 1 est utilisable par tous les pilotes et pour différentes fonctions : en tant que repose-tête pendant la phase de pilotage ou en tant que repose nuque pendant la phase de repos, le pilote étant casqué ou non, le passage d'une fonction à une autre étant réalisable par le biais d'une simple manipulation de l'appui-tête avec une seule main, une poussée latérale pour le déverrouillage de la têtière, une rotation pour le choix de la position puis relâchement de la têtière pour verrouiller à nouveau la têtière.

L'appui-tête suivant l'invention permet ainsi à un pilote, casqué ou non, de combiner différents réglages, vertical et ou inclinaison, au moyen d'un seul mécanisme et un unique degré de liberté, la rotation.

## Revendications

1. Siège pour véhicule, comportant un dossier (4) sur lequel est monté un appui-tête (1), ledit appui-tête comportant une têtière (2) d'appui d'une tête (51) d'un occupant (5) du siège, ledit occupant portant ou non, suivant les circonstances, un casque (52) de protection, **caractérisé en ce que** la têtière (2) comporte au moins trois positions stables :
- une première position pour un maintien cervical de la tête de l'occupant du siège, dans laquelle l'appui-tête (1) assure la fonction d'appui cervical avec et sans port du casque (52),
- une deuxième position pour un maintien occipital de la tête de l'occupant du siège, dans laquelle l'appui-tête (1) assure la fonction d'appui occipital sans port du casque (52),
- une troisième position pour un maintien occipital de la tête de l'occupant du siège, dans laquelle l'appui-tête (1) assure la fonction d'appui occipital avec port du casque (52),
le changement de position de la têtière (2) entre les au moins trois positions stables étant réalisé au moyen de rotations autour d'un axe de rotation (69) unique positionné à une hauteur par rapport au siège sensiblement comprise entre le creux de nuque et une partie supérieure de la nuque d'un pilote sensiblement de taille moyenne, et
la têtière (2) comporte deux positions en translation le long de l'axe de rotation (69) : une position stable dans laquelle la têtière est verrouillée et une position instable dans laquelle la têtière est libre en rotation autour de l'axe de rotation (69).

2. Siège suivant la revendication 1 dans lequel la têtière (2) comporte une première surface (21) d'appui occipital lorsque la têtière est dans la deuxième ou troisième position et une seconde surface (22) d'appui cervical lorsque la têtière est dans la première position.

3. Siège suivant l'une des revendications précédentes dans lequel la position des surfaces d'appui (21, 22) de la têtière (2) dans chacune des au moins trois positions stables de ladite têtière est déterminée par :
- un positionnement de la première surface (21) par rapport à l'axe de rotation (69),
- un positionnement de la seconde surface (22) par rapport à l'axe de rotation (69).

4. Siège suivant l'une des revendications précédentes dans lequel la têtière est solidaire d'un premier arbre de rotation (61) creux, d'axe confondu avec l'axe de rotation (69), coulissant et tournant autour d'un second arbre de rotation (65), coaxial et maintenu fixe au niveau des extrémités par deux plaques (31 a, 31 b), parallèles entre elles et positionnées latéralement sur une partie supérieure (42) du dossier (4) du siège.

5. Siège suivant la revendication 4 dans lequel le premier arbre de rotation (61) comporte à une des extrémités (64b), une première pièce tournante (67b), solidaire dudit premier arbre de rotation et comportant au moins un pion de verrouillage (63) s'engageant dans un évidement (33), parmi une pluralité d'évidements, en regard réalisés sur une première plaque (31 b) lorsque la têtière est dans une position stable.

6. Siège suivant la revendication 4 comportant des moyens de ressort (62), positionnés autour du second arbre de rotation (65) entre une face intérieure (311 a) de la première plaque (31 a) et une face extérieure (671 a) d'une seconde pièce tournante (67a), située à une autre extrémité (64a) du premier arbre de rotation (61), lesdits moyens de ressorts étant comprimés par une poussée latérale de la têtière (2) pour déverrouiller ladite têtière.

7. Appui-tête (1) pour siège de véhicule, comportant une têtière (2) d'appui d'une tête (51) d'un occupant (5) du siège, **caractérisé en ce que** la têtière (2) comporte au moins trois positions stables :
- une première position pour un maintien cervical de la tête de l'occupant, dans laquelle l'appui-tête (1) assure la fonction d'appui cervical avec et sans port du casque (52),
- une deuxième position pour un maintien occipital de la tête de l'occupant du siège, dans laquelle l'appui-tête (1) assure la fonction d'appui occipital sans port du casque (52),
- une troisième position pour un maintien occipital de la tête de l'occupant du siège, dans laquelle l'appui-tête (1) assure la fonction d'appui occipital avec port du casque (52),
le changement de position de la têtière (2) entre les au moins trois positions stables étant réalisé au moyen de rotations autour d'un axe de rotation (69) unique positionné à une hauteur par rapport au siège sensiblement comprise entre le creux de nuque et une partie supérieure de la nuque d'un pilote sensiblement de taille moyenne, et
la têtière (2) comporte deux positions en translation le long de l'axe de rotation (69) : une position stable dans laquelle la têtière est verrouillée et une position instable dans laquelle la têtière est libre en rotation autour de l'axe de rotation (69).

## Patentansprüche

1. Fahrzeugsitz, umfassend eine Rückenlehne (4), an der eine Kopfstütze (1) montiert ist, die eine Kopflehne (2) zum Stützen des Kopfs (51) einer sitzenden Person (5) umfasst, wobei die Person den Umständen entsprechend gegebenenfalls einen Schutzhelm (52) trägt, **dadurch gekennzeichnet, dass** die Kopflehne (2) mindestens drei stationäre Positionen umfasst:
- eine erste Position zur Halsstützung des Kopfs der sitzenden Person, wobei die Kopfstütze (1) in dieser Position die Funktion der Halsstützung gewährleistet, wenn der Helm (52) getragen wird und wenn er nicht getragen wird,
- eine zweite Position zur Hinterhauptstützung des Kopfs der sitzenden Person, wobei die Kopfstütze (1) in dieser Position die Funktion der Hinterhauptstützung gewährleistet, wenn der Helm (52) nicht getragen wird,
- eine dritte Position zur Hinterhauptstützung des Kopfs der sitzenden Person, wobei die Kopfstütze (1) in dieser Position die Funktion der Hinterhauptstützung gewährleistet, wenn der Helm (52) getragen wird,
wobei die Positionsänderung der Kopflehne (2) zwischen den mindestens drei stationären Positionen mittels Drehungen um eine einzige Rotationsachse (69) erfolgt, die bezüglich des Sitzes auf einer Höhe positioniert ist, die im Wesentlichen zwischen der Nackenhöhlung und einem oberen Teil des Nackens eines Piloten von im Wesentlichen mittlerer Größe liegt, und
die Kopflehne (2) zwei entlang der Rotationsachse (69) translatierende Positionen umfasst: eine stationäre Position, in der die Kopflehne verriegelt ist und eine nicht stationäre Position, in der sich die Kopflehne frei um die Rotationsachse (69) drehen kann.

2. Sitz nach Anspruch 1, wobei die Kopflehne (2) eine erste Fläche (21) umfasst, um das Hinterhaupt zu stützen, wenn die Kopflehne in der zweiten oder dritten Position ist, sowie eine zweite Fläche (22), um den Hals zu stützen, wenn die Kopflehne in der ersten Position ist.

3. Sitz nach einem der vorhergehenden Ansprüche, wobei die Position der Stützflächen (21, 22) der Kopflehne (2) in jeder der mindestens drei stationären Positionen der Kopflehne durch
- eine Positionierung der ersten Fläche (21) bezüglich der Rotationsachse (69),
- eine Positionierung der zweiten Fläche (22) bezüglich der Rotationsachse (69) bestimmt wird.

4. Sitz nach einem der vorhergehenden Ansprüche, wobei die Kopflehne fest mit einer ersten hohlen Rotationswelle (61) verbunden ist, deren Achse mit der Rotationsachse (69) zusammenfällt und die um eine koaxiale zweite Rotationswelle (65) gleitet und sich darum dreht, die an den Enden durch zwei Platten (31a, 31b) festgehalten wird, die zueinander parallel sind und seitlich an einem oberen Teil (42) der Rückenlehne (4) des Sitzes positioniert sind.

5. Sitz nach Anspruch 4, wobei die erste Rotationswelle (61) an einem der Enden (64b) ein erstes Drehteil (67b) umfasst, das fest mit der ersten Rotationswelle verbunden ist und mindestens einen Verriegelungsbolzen (63) umfasst, der eine gegenüberliegende Aussparung (33) unter mehreren Aussparungen, die an einer ersten Platte (31b) ausgeführt sind, in Eingriff nimmt, wenn die Kopflehne in einer stationären Position ist.

6. Sitz nach Anspruch 4, umfassend Federmittel (62), die um die zweite Rotationswelle (65) zwischen einer Innenfläche (311a) der ersten Platte (31a) und einer Außenfläche (671a) eines zweiten Drehstücks (67a), das an einem anderen Ende (64a) der ersten Rotationswelle (61) angeordnet ist, positioniert sind, wobei die Federmittel durch einen Seitenschub der Kopflehne (2) zusammengedrückt werden, um die Kopflehne zu entriegeln.

7. Fahrzeugsitz-Kopfstütze (1), umfassend eine Kopflehne (2) zum Stützen des Kopfs (51) einer sitzenden Person (5), **dadurch gekennzeichnet, dass** die Kopflehne (2) mindestens drei stationäre Positionen umfasst:
- eine erste Position zur Halsstützung des Kopfs der sitzenden Person, wobei die Kopfstütze (1) in dieser Position die Funktion der Halsstützung gewährleistet, wenn der Helm (52) getragen wird und wenn er nicht getragen wird,
- eine zweite Position zur Hinterhauptstützung des Kopfs der sitzenden Person, wobei die Kopfstütze (1) in dieser Position die Funktion der Hinterhauptstützung gewährleistet, wenn der Helm (52) nicht getragen wird,
- eine dritte Position zur Hinterhauptstützung des Kopfs der sitzenden Person, wobei die Kopfstütze (1) in dieser Position die Funktion der Hinterhauptstützung gewährleistet, wenn der Helm (52) getragen wird,
wobei die Positionsänderung der Kopflehne (2) zwischen den mindestens drei stationären Positionen mittels Drehungen um eine einzige Rotationsachse (69) erfolgt, die bezüglich des Sitzes auf einer Höhe positioniert ist, die im Wesentlichen zwischen der Nackenhöhlung und einem oberen Teil des Nackens eines Piloten von im Wesentlichen mittlerer Größe liegt, und
die Kopflehne (2) zwei entlang der Rotationsachse (69) translatierende Positionen umfasst: eine stationäre Position, in der die Kopflehne verriegelt ist und eine nicht stationäre Position, in der sich die Kopflehne frei um die Rotationsachse (69) drehen kann.

## Claims

1. Vehicle seat, having a backrest (4) on which a head support (1) is fitted, said head support having a headrest (2) for supporting the head (51) of a seat occupant (5) who may or may not, depending on the circumstances, be wearing a protective helmet (52), **characterized in that** the headrest (2) has at least three stable positions:
- a first position for cervical support of the seat occupant's head, in which position the head support (1) provides cervical support whether or not a helmet (52) is being worn,
- a second position for occipital support of the seat occupant's head, in which position the head support (1) provides occipital support when a helmet (52) is not being worn,
- a third position for occipital support of the seat occupant's head, in which position the head support (1) provides occipital support when a helmet (52) is being worn,
the position of the headrest (2) being changed between the at least three stable positions by means of rotations about a single rotational axis (69) at a height with respect to the seat substantially between the hollow of the nape and an upper part of the nape of a pilot of generally average size, and
the headrest (2) has two translational positions along the rotational axis (69): a stable position in which the headrest is locked and an unstable position in which the headrest can rotate freely about the rotational axis (69).

2. Seat according to Claim 1, in which the headrest (2) has a first occipital support surface (21) when the headrest is in the second or third position and a second cervical support surface (22) when the headrest is in the first position.

3. Seat according to either of the preceding claims, in which the position of the support surfaces (21, 22) of the headrest (2) in each of the at least three stable positions of said headrest is determined by:
- positioning the first surface (21) with respect to the rotational axis (69),
- positioning the second surface (22) with respect to the rotational axis (69).

4. Seat according to one of the preceding claims, in which the headrest is secured to a first, hollow rotary shaft (61), the axis of which coincides with the rotational axis (69) and which slides and revolves about a second, coaxial rotary shaft (65) held such that it is fixed at the ends by two mutually parallel plates (31a, 31b) positioned laterally on an upper part (42) of the seat backrest (4).

5. Seat according to Claim 4, in which the first rotary shaft (61) has at one of its ends (64b) a first revolving component (67b) secured to said first rotary shaft and having at least one locking peg (63) which engages in an opposing recess (33) of a plurality of recesses made in a first plate (31b), when the headrest is in a stable position.

6. Seat according to Claim 4, having spring means (62) positioned around the second rotary shaft (65) between an inner face (311a) of the first plate (31a) and an outer face (671a) of a second revolving component (67a) located at another end (64a) of the first rotary shaft (61), said spring means being compressed by pushing the headrest (2) laterally in order to unlock said headrest.

7. Head support (1) for a vehicle seat, having a headrest (2) for supporting the head (51) of a seat occupant (5), **characterized in that** the headrest (2) has at least three stable positions:
- a first position for cervical support of the occupant's head, in which position the head support (1) provides cervical support whether or not a helmet (52) is being worn,
- a second position for occipital support of the seat occupant's head, in which position the head support (1) provides occipital support when a helmet (52) is not being worn,
- a third position for occipital support of the seat occupant's head, in which position the head support (1) provides occipital support when a helmet (52) is being worn,
the position of the headrest (2) being changed between the at least three stable positions by means of rotations about a single rotational axis (69) at a height with respect to the seat substantially between the hollow of the nape and an upper part of the nape of a pilot of generally average size, and
the headrest (2) has two translational positions along the rotational axis (69): a stable position in which the headrest is locked and an unstable position in which the headrest can rotate freely about the rotational axis (69).
